Europäisches Patentamt

European Patent Office

Office européen des brevets

(11) Veröffentlichungsnummer: **0 331 204 B1**

# EUROPÄISCHE PATENTSCHRIFT

(45) Veröffentlichungstag der Patentschrift: **07.10.92**

(51) Int. Cl.5: **B62D 7/14**

(21) Anmeldenummer: **89103847.3**

(22) Anmeldetag: **04.03.89**

(54) **Verfahren zum Steuern der Hinterräder von Kraftfahrzeugen.**

(30) Priorität: **04.03.88 DE 3807101**

(43) Veröffentlichungstag der Anmeldung:
**06.09.89 Patentblatt 89/36**

(45) Bekanntmachung des Hinweises auf die
Patenterteilung:
**07.10.92 Patentblatt 92/41**

(84) Benannte Vertragsstaaten:
**DE ES FR GB IT SE**

(56) Entgegenhaltungen:
**DE-A- 3 624 457**
**FR-A- 2 604 680**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Rampf, Willy**
**Am Marienbach 14**
**W-8059 Thalheim(DE)**
Erfinder: **Manseicher, Josef**
**Freischützstrasse 84**
**W-8000 München 81(DE)**

EP 0 331 204 B1

**Beschreibung**

Die Erfindung bezieht sich auf ein Verfahren nach dem Oberbegriff des Patentanspruchs 1 und beschäftigt sich weiter mit einer Vorrichtung zur Durchführung dieses Verfahrens.

Aufgabe der vorliegenden Erfindung ist es, dieses Verfahren, das aus der DE 36 24 457 A1 bekannt ist, und die zugehörige Vorrichtung dahingehend zu verbessern, daß auch beim Zurücknehmen des Lenkwinkels der Vorderräder die Fahrstabilität des Kraftfahrzeugs erhöht wird. Als weitere Aufgabe soll dieses Verfahren mit Hilfe einer Vorrichtung durchgeführt werden, die sich durch besonders geringen Aufwand auszeichnet.

Diese Aufgabe wird für das eingangs genannte Verfahren durch die kennzeichnenden Merkmale des Patentanspruchs 1 gelöst.

Der Patentanspruch 2 beinhaltet eine vorteilhafte Weiterbildung des erfindungsgemäßen Verfahrens.

Schließlich beschreibt der Patentanspruch 3 die Vorrichtung, die die oben angegebene Teilaufgabe löst.

Wesentlich für Verfahren und Vorrichtung gemäß der Erfindung ist die Unterscheidung der Lenkwinkeländerung der Vorderräder hinsichtlich ihrer Richtung. Wird der Lenkwinkel vergrößert, so soll die Verstellung der Hinterräder in derselben Weise erfolgen, wie es in der DE 36 24 457 A1 beschrieben ist. Dabei soll es auch möglich sein, anstelle von während der Totzeit unbewegten Hinterrädern diese gemäß einer als PDT-1-Übertragungsfunktion bekannten Steuerung in entgegengesetzter Richtung und nach Ablauf der Totzeit im gleichen Sinne wie die Vorderräder auszulenken.

Wird der Lenkwinkel der Vorderräder hingegen verringert, d. h. werden die Vorderräder in Richtung des Lenkwinkels Null bewegt, so erfolgt die (gleichsinnige) Verstellung der Hinterräder unverzögert. Dies bietet gegenüber einer verzögerten Verstellung der Hinterräder auch in diesem Fall den Vorteil spontaner Fahrzeugreaktion sowie hoher Sicherheitsreserven durch eine verbesserte Fahrstabilität beim Zurücklenken bzw. beim Spurwechsel. Die Fahrstabilität ist gegenüber einem Kraftfahrzeug mit nichtgelenkten Hinterrädern somit auch beim Zurücklenken deutlich erhöht. Insgesamt ergibt sich somit eine wesentliche Verbesserung der Fahrstabilität und damit der Fahrsicherheit insbesondere bei hohen Fahrzeuggeschwindigkeiten.

In der Zeichnung ist ein Ausführungsbeispiel der Erfindung schaltungstechnisch dargestellt. Diese zeigt eine Vorrichtung zum Durchführen des Verfahrens in schematischer Darstellung.

In einem nicht näher gezeigten Kraftfahrzeug dient ein Stellglied 1 dazu, den Lenkwinkel der Hinterräder 2 und 3 zu verändern. Dem Stellglied 1 ist das Ausgangssignal eines Differenzierglieds 4 zugeführt. Das Differenzierglied 4 seinerseits ist über einen Digital-/Analog-Wandler 5 mit einem Geber 6 für den Lenkwinkel der Vorderräder verbunden. Der Geber 6 nimmt den Lenkwinkel der Vorderräder über den Lenkwinkel der Lenksäule 7 ab, die durch ein Lenkrad 8 bewegt wird. Der Geber 6 ist als Winkelgeber, z. B. in Form eines Potentiometers ausgebildet.

Das Differenzierglied 4 erzeugt bei einer positiven Änderung des Lenkwinkels der Vorderräder an seinem einen Ausgang 9 ein Ausgangssignal, das der Änderung dieses Lenkwinkels entspricht und das über ein Verzögerungsglied 11 auf das Stellglied 1 geführt ist. Bei einer negativen Änderung des Lenkwinkels, d. h. einem Zurückstellen der Vorderräder in Richtung ihrer Ausgangslage erzeugt das Differenzierglied 4 ein Ausgangssignal an seinem anderen Ausgang 10, das direkt auf das Stellglied 1 geleitet ist. Das Verzögerungsglied 11 führt das Ausgangssignal des Differenzierglieds 4 mit einer Totzeit auf das Stellglied 1, die von der Fahrzeuggeschwindigkeit abhängt. Dabei kann die Totzeit erst ab einer vorgegebenen Fahrzeuggeschwindigkeit von beispielsweise 75 km/h wirksam und zunächst umso größer sein, je größer die Fahrzeuggeschwindigkeit ist. Bei noch höherer Fahrgeschwindigkeit kann die Totzeit dann wieder abnehmende Tendenz aufweisen. Die Fahrzeuggeschwindigkeit ihrerseits wird mit Hilfe eines Gebers 12 bestimmt, der an geeigneter Stelle der Hinterachse (nicht im einzelnen dargestellt) sitzt.

Durch die nur bei einer Vergrößerung des Lenkwinkels der Vorderräder erfolgende verzögerte gleichsinnige Verstellung des Lenkwinkels der Hinterräder bei demgegenüber unverzögerter Verstellung des Lenkwinkels der Hinterräder beim Zurücklenken der Vorderräder ergibt sich eine deutlich erhöhte Fahrstabilität sowohl bei einer Vergrößerung als auch bei einer Verringerung des Vorderrads-Lenkwinkels.

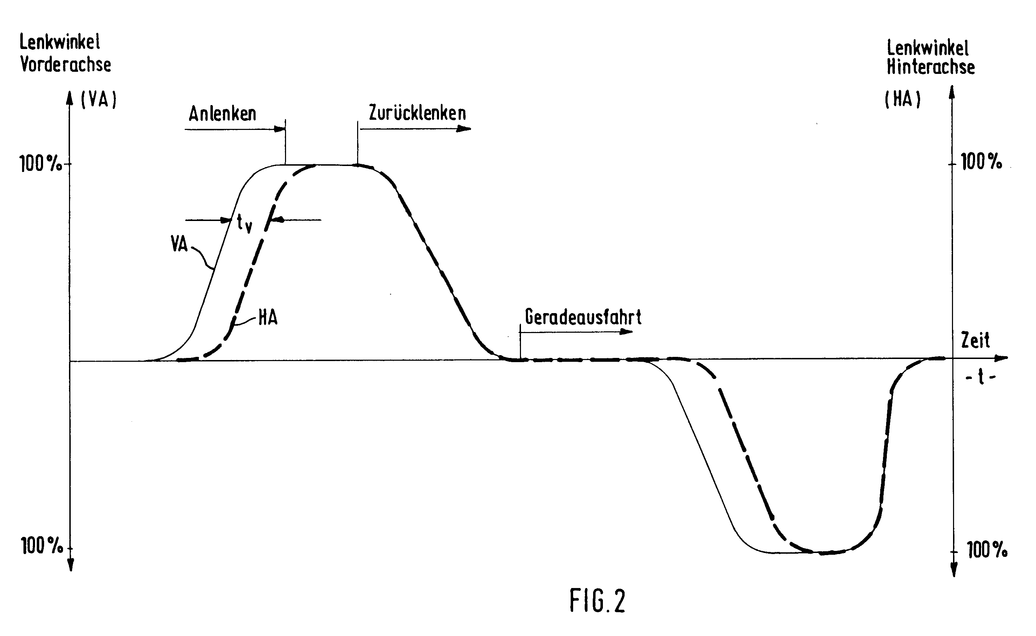

Beim Diagramm von Fig. 2 ist der Zusammenhang zwischen den Lenkwinkeln von Vorder- und Hinterrädern bei einem Spurwechsel gezeigt. Dabei ist der jeweilige Lenkwinkel der Vorderachse VA ununterbrochen und der der Hinterachse HA strichliert eingezeichnet. Deutlich ist zu erkennen, daß beim Anlenken, d. h. bei einer Vergrößerung des Lenkwinkels der Vorderräder der Lenkwinkel der Hinterräder um eine Totzeit tv verzögert und bei Zurücklenken, d. h. bei einer Verringerung des Lenkwinkels der Vorderräder der Lenkwinkel der Hinterräder unverzögert verstellt wird. Das Diagramm zeigt dabei die relative Veränderung des Lenkwinkels von Vorder- und Hinterräder bezogen auf den maximalen Wert der Verstellung, der zu 100 % angenommen ist. Bei der den Spurwechsel abschließenden Lenkbewegung wird erneut zunächst ein Anlenkvorgang und dann wieder ein Zurücklenkvorgang, allerdings nunmehr in jeweils entgegengesetzter Richtung wie zuvor durchgeführt. Am Ende des dargestellten Vorgangs fährt das Kraftfahrzeug parallel zur ursprünglichen Spur.

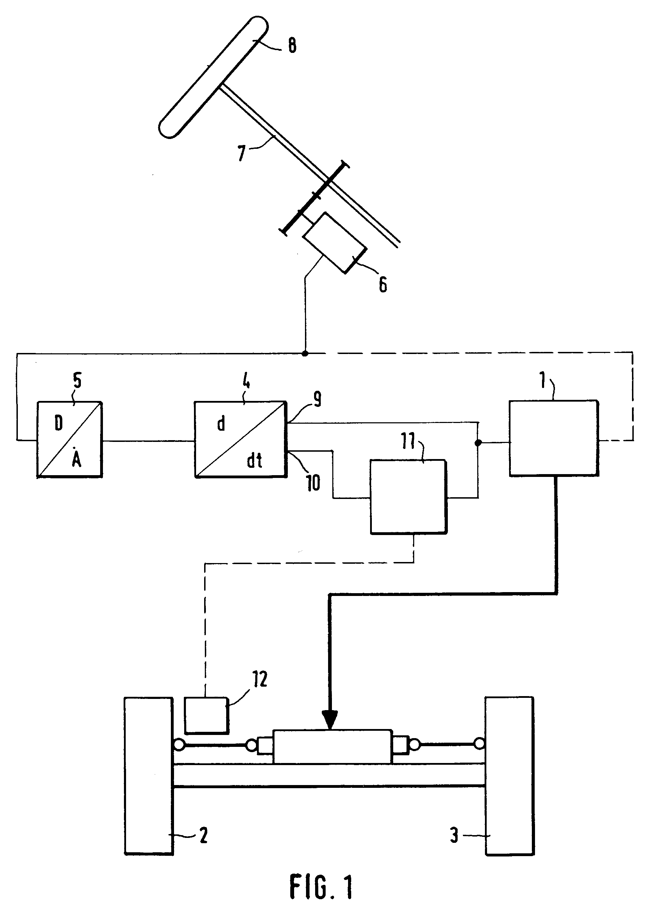

Die Synchronizität zwischen Vorder- und der Verstellung der Vorder- und Hinterräder kann durch geeignete Dimensionierung des Stellglieds 1 erreicht werden. Dabei ist in Fig. 1 mit Hilfe einer strichlierten Verbindung zwischen dem Geber 6 und dem Stellglied 1 ein unmittelbarer Einfluß dieses Gebers und damit des tatsächlichen Lenkwinkels der Vorderräder auf das Stellglied 1 dargestellt und gegeben.

**Patentansprüche**

1. Verfahren zum Steuern der Hinterräder von Kraftfahrzeugen in Abhängigkeit von einer Auslenkung der Vorderräder, mit mechanisch entkoppelten Lenkmitteln für Vorder- und Hinterräder und einem Übertragungsglied für die Verstellung des Lenkmittels der Hinterräder in Abhängigkeit von der Auslenkung der Vorderräder, bei dem bei einer Verstellung der Vorderräder die Hinterräder erst nach Ablauf einer kurzen Totzeit in einer zur Richtung der Vorderräder gleichsinnigen Richtung verstellt werden, dadurch gekennzeichnet, daß die Verstellung der Hinterräder nur bei einer Vergrößerung des Lenkwinkels der Vorderräder um die Totzeit (tv) verzögert, bei einer Verringerung des Lenkwinkels der Vorderräder jedoch unverzögert erfolgt.

2. Verfahren nach Anspruch 1, dadurch gekennzeichnet, daß die für sich genommene relative Verstellung von Vorder- und Hinterräder bei Verringerung des Lenkwinkels der Vorderräder synchron vorgenommen wird.

3. Vorrichtung zum Durchführen des Verfahrens nach Anspruch 1 oder 2, dadurch gekennzeichnet, daß das Ausgangssignal eines Lenkwinkelgebers (6) für die Vorderräder einem Differenzierglied (4) zugeführt wird, dessen einer Ausgang (10) bei einer Vergrößerung des Lenkwinkels über ein Verzögerungsglied (11) variabler Totzeit und dessen anderer Ausgang (9) bei einer Verringerung des Lenkwinkels direkt jeweils demselben Stellglied (1) für die Hinterräder (2, 3) zugeführt ist.

**Claims**

1. A method for controlling the rear wheels of motor vehicles in dependence upon a steering deflection of the front wheels, with mechanically-decoupled steering means for front and rear wheels and a transmission member for the shifting of the steering means of the rear wheels in dependence upon the steering deflection of the front wheels, in which, in a displacement of the front wheels, the rear wheels are displaced only after the elapse of a short idle time in a direction equal to the direction of the front wheels, characterised in that the displacement of the rear wheels takes place with delay by the idle time (tv) only in the case of an increase of the steering angle of the front wheels, but without delay in the case of a reduction of the steering angle of the front wheels.

2. A method according to Claim 1, characterised in that the shift of front and rear wheels, relative when taken in itself, is effected synchronously when the steering angle of the front wheels is reduced.

3. An apparatus for carrying out the method according to Claim 1 or 2, characterised in that the output signal of a steering angle indicator (6) for the front wheels is fed to a differentiating member (4), the one output (10) of which is fed by way of a delay member (11) of variable idle time in the case of an increase of the steering angle, and the other output (9) of which, on reduction of the steering angle, is fed directly in each case to the same setting member (1) for the rear wheels (2, 3).

**Revendications**

1. Procédé pour commander les roues arrière de véhicules automobiles en fonction d'une déviation des roues avant, avec des moyens de braquage découplés mécaniquement pour les roues avant et les roues arrière et un organe de transmission pour le réglage des moyens de braquage des roues arrière, en fonction de la déviation des roues avant, procédé dans lequel, lors d'un réglage des roues avant, les roues arrière ne sont réglées dans une direction de sens identique à la direction des roues avant, qu'après l'écoulement d'un temps mort de courte durée, procédé caractérisé en ce que le réglage des roues arrière n'est retardé du temps mort (tv) que lors d'une augmentation de l'angle de braquage des roues avant, tandis que lors d'une diminution de l'angle de braquage des roues avant, ce réglage s'effectue sans retard.

2. Procédé selon la revendication 1, caractérisé en ce que le réglage relatif considéré en soi des roues avant et des roues arrière, s'effectue en synchronisme lors de la diminution de l'angle de braquage des roues avant.

3. Dispositif pour la mise en oeuvre du procédé selon la revendication 1 ou la revendication 2, dispositif caractérisé en ce que le signal de sortie d'un indicateur d'angle de braquage (6) des roues avant est appliqué à un élément différenciateur (4), dont une sortie (10) est appliquée à un organe de réglage (1) pour les roues arrière (2, 3), par l'intermédiaire d'un organe de temporisation (11) de temps mort variable dans le cas d'une augmentation de l'angle de braquage, et dont l'autre sortie (9) est appliquée directement à ce même organe de réglage, lors d'ne diminution de l'angle de braquage.

FIG. 1

Lenkwinkel
Vorderachse
(VA)

Lenkwinkel
Hinterachse
(HA)

Anlenken

Zurücklenken

100%

100%

$t_v$

VA

HA

Geradeausfahrt

Zeit
- t -

100%

100%

EP 0 331 204 B1

FIG.2